# EUROPÄISCHE PATENTANMELDUNG

(11) **EP 1 950 066 A2**
(43) Veröffentlichungstag der Anmeldung: **30.07.2008**
(21) Anmeldenummer: 08000462.5
(22) Anmeldetag: 11.01.2008
(51) Int. Cl.: B60H 1/34

(54) **Luftausströmer**

(30) Priorität: 24.01.2007 DE 102007004578
(71) Anmelder: Behr GmbH & Co. KG, 70469 Stuttgart (DE)
(72) Erfinder: Klingler, Dietrich, 73540 Heubach (DE); Röhm, Klaus, 71394 Kernen i.R (DE); Zeller, Kuno, 70435 Stuttgart (DE)

(57) **Zusammenfassung**

Die Erfindung betrifft einen Luftausströmer (1), insbesondere für ein Kraftfahrzeug, umfassend im Strömungsausgangsbereich (A) mindestens zwei parallel nebeneinander angeordnete Luftaustrittskanäfe (2.a, 2.b), die jeweils in einen äußeren, insbesondere ringförmigen Kanal (2.a.1, 2.b.1) und einen inneren Kanal (2.a.2, 2.b.2) unterteilt sind, wobei der jeweilige äußere Kanal (2.a.1, 2.b.1) den zugehörigen inneren Kanal (2.a.2, 2.b.2) umgibt und parallel zu diesem verläuft, und wobei im Strömungseingangsbereich (E) jeweils die äußeren Kanälen (2.a.1, 2.b.1) von einem ersten Lufteintrittskanal (4.1) und die inneren Kanäle (2.a.2, 2.b.2) von einem zweiten Lufteintrittskanal (4.2) beströmbar sind und in einem Übergangsbereich zwischen Ausströmbereiche der Lufteintrittskanäle (4.1, 4.2) und Anströmbereiche der äußeren Kanäle (2.a.1, 2.b.1) und der inneren Kanäle (2.a.2, 2.b.2) mindestens eine erste Luftleitvorrichtung (31) dem ersten Lufteintrittskanal (4.1) und mindestens eine zweite Luftleitvorrichtung (3.2) dem zweiten Lufteintrittskanal (4.2) zugeordnet sind.

## Beschreibung

Die Erfindung betrifft einen Luftausströmer, insbesondere für eine Klimatisierung eines Innenraums, z. B. eines Fahrzeugs.

Im Stand der Technik sind Luftausströmer in diversen Varianten bekannt. Sie dienen dazu, im Fahrzeuginnenraum schnell ein angenehmes Klima zu schaffen. Es ist ihre Aufgabe, zu diesem Zweck genügend Luft in den Innenraum möglichst zugfrei zu befördern.

Aus der DE 10 2004 038 016 A1 ist ein Luftausströmer zur Innenbelüftung von Räumen, wie Fahrgasträumen von Straßen- oder Schienenfahrzeugen, bekannt, der in einem ersten Betriebsfall einen gerichteten, strahlförmigen Luftaustritt ("Spotförmiger Luftaustritt") mit großer Eindringtiefe und in einem zweiten Betriebsfall einen diffusen Luftaustritt mit möglichst weit aufgefächertem Luftstrahl sowie beliebige, stetig zwischen diesen beiden Betriebsfällen einstellbare Mischbetriebsfälle ermöglicht, so dass sowohl eine schnelle Durchmischung der Raumluft als auch eine gleichmäßige, zugluftfreie Belüftung möglich ist.

Der gerichtete, strahlförmige Luftaustritt wird mit einer möglichst turbulenzarmen, gleichförmig gerichteten Rohrströmung, der diffuse Luftaustritt hingegen mittels Impulstransport in normaler Richtung zur Strahlachse durch verstärkte Turbulenz und/oder Drall unter Zuhilfenahme von Luftleitblechen erreicht. Beim genannten Luftausströmer werden diese Strömungen in getrennten Luftkanälen für die unterschiedlichen Betriebsfälle geführt.

Um jeweils einen von zwei zueinander parallel liegenden zylinderförmigen Teilkanäle ist dabei ein weiterer Teilkanal konzentrisch angeordnet, wobei die Luftströmung in den äußeren Teilkanälen jeweils durch Leiteinrichtungen mit Drall beaufschlagt wird; während die Luftströmung in den inneren Kanälen direkt austritt. Die Luftströme der einzelnen Teilkanäle sind dabei unabhängig voneinander steuerbar. Die genannte Bauform bedingt einen Luftaustritt aus zwei nebeneinander liegenden kreisrunden Austrittsflächen, die zusammen eine vergleichsweise große Fläche einnehmen.

Bei Fahrzeugen, in denen dieser Luftausströmer aus Platzgründen nicht in Frage kommt, könnte dieser entsprechend skaliert.werden, was jedoch zu höheren Strömungsgeschwindigkeiten und damit Druckabfall und akustischen Problemen führt.

Aus der DE 102 43 974 A1 ist darüber hinaus ein kompakter Lufteinströmer bekannt, bei dem ein Luft zuführender Luftkanal mit einer Dosiervorrichtung und einer Luftleitvorrichtung die Luft in der Luftleitvorrichtung zumindest bereichsweise in mehrere Teilkanäle aufteilt, wobei im Eintrittsbereich keine wesentliche Richtungsänderung der Teilkanäle vorgesehen ist. Dabei erfolgt die Steuerung der verschiedenen Teilluftströme hinsichtlich der Dosierung der Luftmenge und der Einstellung der Strömungsart - diffus und/oder spotförmig - mittels getrennter Luftleit- und Dosiervorrichtungen, so dass dieser Lufteinströmer aufwendig ist und einen großen Bauraum einnimmt.

Der Erfindung liegt die Aufgabe zugrunde, einen alternativen Luftausströmer mit einem geringeren Druckabfall und mit kleiner Baugröße zur Verfügung zu stellen. '

Diese Aufgabe wird erfindungsgemäß gelöst durch einen Luftausströmer mit den Merkmalen des Anspruchs 1.

Vorteilhafte Ausgestaltungen der Erfindung sind Gegenstand der Unteransprüche.

Die Erfindung schlägt zur Lösung der Aufgabe einen Luftausströmer vor, der im zugehörigen Strömungsausgangsbereich mindestens zwei parallel nebeneinander angeordnete Luftaustrittskanäle umfasst, die jeweils in einen äußeren, insbesondere ringförmigen Kanal und einen inneren Kanal unterteilt sind, wobei der jeweilige äußere Kanal den zugehörigen inneren Kanal umgibt und parallel zu diesem verläuft. Dabei sind im Strömungseingangsbereich des Luftausströmers jeweils die äußeren Kanälen von einem ersten Lufteintrittskanal und die inneren Kanäle zumindest von einem zweiten Lufteintrittskanal beströmbar, wobei im Übergangsbereich zwischen Ausströmbereiche der Lufteintrittskanäle und Anströmbereiche der Luftaustrittskanäle, insbesondere der äußeren Kanäle und der inneren Kanäle mindestens eine erste Luftleitvorrichtung dem ersten Lufteintrittskanal und mindestens eine zweite Luftleitvorrichtung dem zweiten Lufteintrittskanal zugeordnet sind.

Eine derartige Ausgestaltung des Luftausströmers, bei welcher die Luftleitvorrichtungen im Bereich des kleinsten Querschnitts des Luftausströmers, d.h. im Übergangsbereich zwischen Ausströmbereiche der Lufteintrittskanäle und Einströmbereiche der Luftaustrittskanäle, angeordnet sind, ist eine sehr kompakte und kleine Bauweise ermöglicht. Dabei können die Luftleitvorrichtungen am Ende der Ausströmbereiche, zwischen Ausströmbereich und Einströmbereich bzw. am Anfang der Einströmbereich angeordnet sein. Vorzugsweise ist der Übergangsbereich in Längsausdehnung weitgehend mittig des Luftausströmers gebildet. Darüber hinaus ist die erfindungsgemäße Ausgestaltung des Luftausströmers besonders kostengünstig zu realisieren und bietet bei geringem Gewicht zusätzlich eine einfache Montage und einen geringen luftseitigen Druckabfall. Dabei dient die erste Luftleitvorrichtung insbesondere zur Erzeugung und/oder Steuerung einer einstellbaren Drallströmung. Die zweite Luftleitvorrichtung dient insbesondere der Steuerung einer einstellbaren spotförmigen oder gleichmäßig gerichteten Strömung. Auch ermöglicht eine derartige Anordnung von äußeren und inneren Luftleitvorrichtungen unmittelbar vor dem oder im Anströmbereich der Luftaustrittskanäle eine besonders kompakte Bauform, indem die Baulänge und/oder -höhe des Luftausströmers deutlich reduziert ist. Insbesondere wird eine Verkürzung der Baulänge im Anströmbereich von Spotkanal (= innerer Kanal) und Diffuskanal (=äußerer Kanal) erzielt. Darüber hinaus ist eine Entkopplung der Funktion und Luftführung von Spotkanal und Diffuskanal in besonders einfacher Art und Weise erreicht. Ferner ergibt sich eine einfache Fertigungsmöglichkeit durch den weitgehend symmetrischen Aufbau. Durch die Nutzung des maximalen Strömungsquerschnitts der Lufteintrittskanäle in allen Betriebsfällen ergeben sich geringere Strömungsgeschwindigkeiten und dadurch geringere Druckverluste sowie ein besseres akustisches Verhalten. Nachfolgend werden die beiden verschiedenen Luftleitvorrichtungen näher beschrieben.

In einer möglichen Ausführungsform ist die erste Luftleitvorrichtung in Strömungsrichtung gesehen im Ausströmbereich, vorzugsweise am Ende des Ausströmbereichs des ersten Lufteintrittskanals angeordnet. Je nach Vorgabe kann die erste Luftleitvorrichtung außerhalb des ersten Lufteintrittskanals angeordnet sein. Alternativ kann die erste Luftleitvorrichtung im ersten Lufteintrittskanal angeordnet und somit innerhalb des ersten Lufteintrittskanals integriert sein. Eine innerhalb des ersten Lufteintrittskanals angeordnete erste Luftleitvorrichtung ermöglicht einen besonders Raum sparenden Aufbau des Luftausströmers. Darüber hinaus ist die Anströmung des ersten Lufteintrittskanals optimiert, wodurch eine weitere Verkürzung der Baulänge und/oder der Bauhöhe ermöglicht ist.

Bevorzugt ist die erste Luftleitvorrichtung bei einer Anordnung im ersten Lufteintrittskanal aus einem flügelförmigen Luftleitelement gebildet, das insbesondere zwei Helices bildet, die einen Drall der ausströmenden Luft bewirken. Im Sinne der Erfindung kommt dabei als Helix jede sich gewunden oder rotierend in die Tiefe und/oder die Höhe des Raums, d.h. des ersten Lufteintrittskanals, fortsetzende Struktur in Betracht. Eine solche Struktur kann insbesondere auch abschnittsweise linear, gewölbt, flügelförmig, schneckenhausförmig, spiralförmig oder als schraubenförmige Wendel ausgebildet sein. Hierzu sind die Luftleitelemente entsprechend gekrümmt, gewölbt und/oder eben ausgeführt.

Zweckmäßigerweise ist das flügelförmige Luftleitelement achsensymmetrisch bezüglich dessen Symmetrieachse und/oder dessen Bewegungsachse ausgebildet. Beispielsweise sind diese in Art von Flügeln oder gewölbten Flächen entlang der Symmetrieachse oder einer parallel zur Symmetrieachse verlaufenden Bewegungsachse ausgebildet. Eine derartige achsensymmetrische Ausbildung des flügelförmigen Luftleitelements ist weitgehend kompakt und Bauraum sparend.

Vorzugsweise ist das flügelförmige Luftleitelement zwischen einer den ersten Lufteintrittskanal bzw. den Anströmbereich der anströmbaren äußeren Kanäle vollständig schließenden Endstellung und vollständig öffnenden Endstellung in eine beliebige Zwischenstellung stellbar. Hierdurch sind verschiedene Betriebsfälle oder Mischbetriebsfälle zur Einstellung einer dem thermischen Komfort optimierenden Belüftung des Fahrzeuginnenraums ermöglicht.

Zweckmäßigerweise ist das flügelförmigen Luftleitelement entlang mindestens einer oder mehrerer Führungsschienen senkrecht in den ersten Lufteintrittskanal ein- oder ausfahrbar. In einer möglichen Ausführungsform kann die jeweilige Führungsschiene als eine Gewindestange oder eine Spindel ausgeführt sein, an der das flügelförmige Luftleitelement bewegbar angeordnet ist. Hierzu weist das flügelförmige Luftleitelement beispielsweise mit einem Innengewinde versehene Ausnehmungen auf, die in das Außengewinde der Gewindestange bzw. der Spindel eingreifen. Dabei ist die Führungsschiene endseitig über ein Zahnradgetriebe, insbesondere über ein an der Führungsschiene angeordnetes Zahnrad und/oder Zahnsegment angetrieben. Zum Antrieb des Zahnradgetriebes ist vorzugsweise ein Betätigungsrad oder ein Betätigungsring vorgesehen, der mit Zähnen oder Zahnsegmenten versehen ist, die in das Zahnradgetriebe eingreifen.

In einer alternativen Ausführungsform kann die erste Luftleitvorrichtung bei einer Anordnung außerhalb des ersten Lufteintrittskanals aus mindestens zwei insbesondere miteinander koppelbaren klappenförmigen Luftleitelementen gebildet sein, die jeweils eine Helix bilden und einen Drall der ausströmenden Luft bewirken. Hierzu sind die Klappen beispielsweise mit einer Ein- oder Auswölbung versehen oder entsprechend gewunden oder wendelförmig ausgeführt. Dabei sind die beiden klappenförmigen Luftleitelemente am Ende des Ausströmbereichs des ersten Lufteintrittskanals derart angeordnet, dass durch eine Drehung der Klappen in den Luftausströmer, insbesondere in den Anströmbereich der zugehörigen anströmbaren äußeren Kanäle hinein diese vollständig geschlossen oder geöffnet werden kann. Für eine möglichst Bauraum sparende Anordnung und zur Einstellung verschiedener Betriebsfälle sind hierzu die beiden klappenförmigen Luftleitelemente jeweils über eine zugehörige, insbesondere in Längsausdehnung des Luftausströmers parallel zum Lufteintrittskanal und jeweiligen äußeren Kanal verlaufende Drehachse zwischen einer den jeweils zugehörigen äußeren Kanal vollständig schließenden Endstellung und vollständig öffnenden Endstellung in eine beliebige Zwischenstellung stellbar.

Zweckmäßigerweise sind die beiden klappenförmigen Luftleitelemente über ein Koppelgestänge synchron schwenkbar, insbesondere zueinander schwenkbar. Dabei sind den jeweiligen klappenförmigen Luftleitelementen zugehörige Drehwellen, die insbesondere parallel zum jeweiligen Kanal verlaufen, vorzugsweise über ein Ritzel oder ein Zahnrad angetrieben.

In einer alternativen Ausführungsform kann das jeweilige außerhalb des ersten Lufteintrittskanals angeordnete klappenförmige Luftleitelement aus mindestens zwei Teilsegmenten gebildet sein, die mindestens eine verstellbare Helix bilden. Dabei sind zur Verstellung des jeweiligen Luftleitelements die einzelnen zueinander beweglichen Teilsegmenten in einer Führung, z. B. einer Kulissenführung, geführt. Darüber hinaus ist ein Verstellelement, z. B. ein Betätigungsring oder -rad, vorgesehen, das als Drehhebel ausgebildet ist, der die Teilsegmente bewegt, so dass diese in der Kulissenführung führbar sind.

Zur Einstellung der durch den zweiten Lufteintrittskanal geführten und aus den inneren Kanälen austretenden, spotförmigen Strömung ist die zweite Luftleitvorrichtung aus mindestens zwei inneren klappenförmigen Luftleitelementen gebildet, die jeweils in den Anströmbereichen der inneren Kanälen angeordnet sind. Dabei ist das jeweilige innere klappenförmige Luftleitelement auf einer quer zum zugehörigen inneren Kanal verlaufenden Drehachse, insbesondere der Mittelwaagerechten oder der Mittelsenkrechten, zwischen einer den jeweiligen inneren Kanal vollständig schließenden Endstellung und einer vollständig öffnenden Endstellung in eine beliebige Zwischenstellung verstellbar, insbesondere schwenkbar.

Vorzugsweise sind die den inneren klappenförmigen Luftleitelementen zugehörigen Drehwellen miteinander entlang einer Symmetrieachse oder senkrecht zu einer Symmetrieachse gemeinsam angeordnet und koppelbar. Dies ermöglicht eine besonders Bauraum sparende Anordnung und eine gleichmäßige Einstellung der in und durch die inneren Kanäle geführten und aus diesen austretenden, spotförmigen Strömungen (= zwei Kanäle = zwei spotförmige Ausströmungen), die aus der aus dem zweiten Lufteintrittskanal austretenden Strömung gebildet ist. Dabei sind die klappenförmigen Luftleitelemente zweckmäßigerweise achsensymmetrisch bezüglich der Symmetrieachse ausgebildet. Beispielsweise sind diese in Art von Umlenk- oder Schmetterlingsklappen entlang der Symmetrieachse oder einer senkrecht zur Symmetrieachse verlaufenden Drehachse ausgebildet. Darüber hinaus sind die Drehachsen der inneren klappenförmigen Luftleitelemente bevorzugt entlang der Symmetrieachse und nebeneinander angeordnet. Alternativ können die Drehachsen parallel zueinander sowie senkrecht zur Symmetrieachse verlaufen. Auch können die Drehachsen entlang der Symmetrieachse verteilt oder parallel zu dieser verlaufen.

Vorzugsweise sind die inneren klappenförmigen Luftleitelemente synchron verstellbar angeordnet. Auch können diese Luftleitelemente voneinander entkoppelt sein und asynchron verstellbar sein.

In einer weiteren Ausführungsform sind die erste Luftleitvorrichtung und die zweite Luftleitvorrichtung in Strömungsrichtung gesehen in einer Ebene übereinander und/oder versetzt hintereinander angeordnet. Hierdurch ist eine hohe Flexibilität in der Steuerung und Einstellung der verschiedenen Strömungsarten möglich. Zur Einstellung von verschiedenen Betriebsfällen - nur diffuse Strömung, nur spotförmige Strömung und/oder gemischt diffuse und spotförmige Strömung - sind die erste Luftleitvorrichtung und die zweite Luftleitvorrichtung asynchron oder synchron verstellbar. Hierzu sind die erste Luftleitvorrichtung und die zweite Luftleitvorrichtung über eine Getriebeanordnung miteinander koppelbar. Die verwendete als ein Zahnradgetriebe oder ein Stangengetriebe ausgebildete Getriebeanordnung kann beispielsweise in Art der in der EP 1 520 736 A2 bekannte Getriebeanordnung ausgebildet sein. Über ein gemeinsames oder separate Betätigungselemente, die in die Getriebeanordnung eingreifen, wird dann eine Steuerung der verschiedenen Betriebsfälle ermöglicht. Dabei kann oder können die Betätigungselemente manuell oder über einen gemeinsamen Antrieb, z. B. einem Elektromotor betätigt werden. Auch können separate Antriebe für das jeweilige Betätigungselement der ersten und der zweiten Luftleitvorrichtung vorgesehen sein. Eine unabhängige Ansteuerung der verschiedenen Luftleitvorrichtungen ermöglicht ein variables Ausströmprofil und eine variable Ausblasrichtung.

Ausführungsbeispiele der Erfindung werden anhand einer Zeichnung näher erläutert. Darin zeigen:
- Fig. 1: schematisch in perspektivischer Darstellung von hinten einen Luftausströmer mit einem ersten Lufteintrittskanal und einem zweiten Lufteintrittskanal und mit mehreren zugehörigen, innen angeordneten Luftleitvorrichtungen,
- Fig. 2: schematisch in perspektivischer Darstellung von vorne den Luftausströmer gemäß Figur 1,
- Fig. 3: schematisch im Querschnitt von hinten den Luftausströmer gemäß Figur 1 mit geschlossener Diffusklappe,
- Fig. 4: schematisch in Draufsicht von oben den Luftausströmer gemäß Figur 1,
- Fig. 5: schematisch im Längsschnitt den Luftausströmer gemäß Figur 4,
- Fig. 6: schematisch eine alternative Ausführungsform von hinten für einen Luftausströmer mit einem ersten und einem zweiten Lufteintrittskanal und mit mehreren zugehörigen Luftleitvorrichtungen, wovon zumindest zwei außerhalb der Lufteintrittskanäle angeordnet sind,
- Fig. 7: schematisch in perspektivischer Darstellung von hinten den Luftausströmer gemäß Figur 6,
- Fig. 8: schematisch in perspektivischer Darstellung von vorne den Luftausströmer gemäß Figur 6,
- Fig. 9: schematisch in Draufsicht von oben den Luftausströmer gemäß Figur 6,
- Fig. 10: schematisch im Querschnitt den Luftausströmer gemäß Figur 9,
- Fig.11: schematisch im Querschnitt eine alternative Ausführungsform für einen Luftausströmer mit einer alternativen Ausführungsform für die außerhalb der Lufteintrittskanäle angeordneten Luftleitvorrichtungen, und
- Fig. 12: schematisch eine Ausführungsform für eine Luftleitvorrichtung mit mehreren Teilsegmenten.

Einander entsprechende Teile sind in allen Figuren mit den gleichen Bezugszeichen versehen.

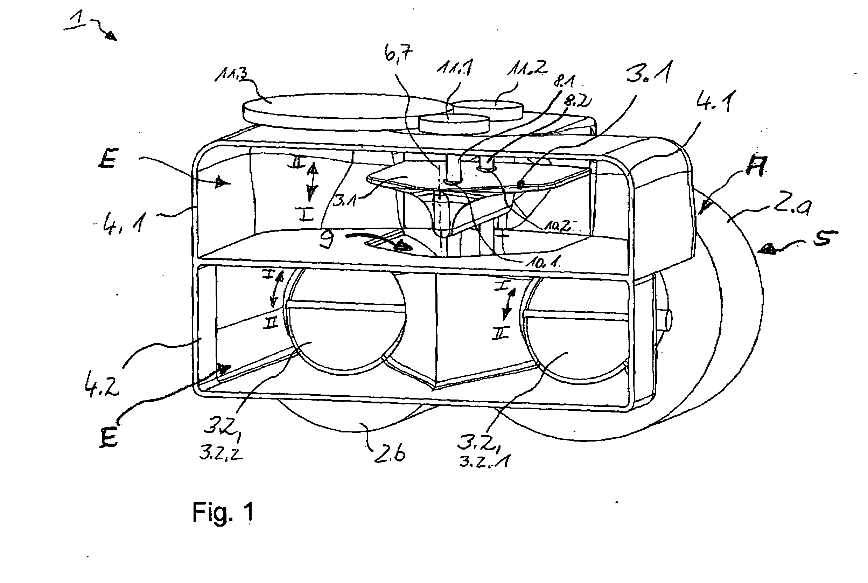

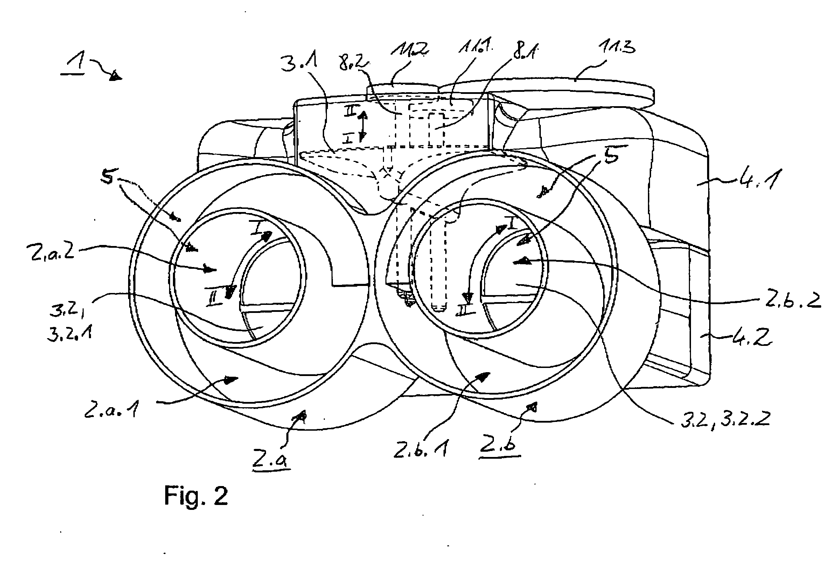

Figuren 1 und 2 zeigen einen Luftausströmer 1 in der Ansicht von hinten bzw. von vorne mit zwei in einem Strömungsausgangsbereich A (auch Ausströmbereich oder Austrittsseite genannt) des Luftausströmers 1 parallel zueinander angeordneten Luftaustrittskanälen 2.a und 2.b. Dabei umfasst der jeweilige Luftaustrittskanal 2.a und 2.b jeweils einen äußeren Kanal 2.a.1 bzw. 2.b.1 und einen inneren Kanal 2.a.2 bzw. 2.b.2. Die äußeren Kanäle 2.a.1 und 2.b.1 sind jeweils koaxial zum zugehörigen inneren Kanal 2.a.2 bzw. 2.b.2 angeordnet (siehe insbesondere Figur 2). D.h. der äußere Kanal 2.a.1 oder 2.b.1 umgibt in Art eines Ringkanals den zugehörigen inneren Kanal 2.a.2 bzw. 2.b.2 vollständig und verläuft parallel zu diesem. Die Luftaustrittskanäle 2.a und 2.b weisen jeweils einen kreisförmigen Querschnitt auf. Alternativ können diese auch einen anderen geeigneten Querschnitt, z. B. rechteckigen Querschnitt, aufweisen. Die äußeren Kanäle 2.a.1 und 2.b.1 sowie die inneren Kanäle 2.a.2 und 2.b.2 sind im Strömungseingangsbereich E des Luftausströmers 1 von einem ersten Lufteintrittskanal 4.1 und einem zweiten Lufteintrittskanal 4.2 beströmt. Dabei sind der erste Lufteintrittskanal 4.1 und der zweite Lufteintrittskanal 4.2 übereinander angeordnet. Alternativ kann in nicht näher dargestellter Art und Weise der erste Lufteintrittskanal 4.1 koaxial zu einem inneren zweiten Lufteintrittskanal 4.2 angeordnet sein und diesen vollständig umgeben. Auch können mehrere innere, zweite Lufteintrittskanäle 4.2 vorgesehen sein, die beispielsweise durch eine Trennwand getrennt sind.

Der Luftausströmer 1 dient in Art einer Düse der Zuführung von Luft zur Klimatisierung eines Fahrzeuginnenraums. Um einen möglichst guten Klimakomfort im Fahrzeuginnenraum zu erzielen, sind mehrere Luftleitvorrichtungen 3.1 und 3.2 vorgesehen, die zur Beeinflussung der Luftströmung zwischen zwei Endstellungen I bis II in eine beliebige Zwischenstellung stellbar sind und verschiedene Strömungsarten, beispielsweise diffus oder spotförmig, einstellen können. Hierzu können die Zwischen- oder Endstellungen I, II einen vorgegebenen Betriebsfall darstellen.

Im Ausführungsbeispiel nach den Figuren 1 und 2 ist eine erste Luftleitvorrichtung 3.1 (auch äußeres Luftleit- oder Stellelement genannt) vor dem Anströmbereich der äußeren Kanale 2.a.1 und 2.b.1 im Ausströmbereich des ersten Lufteintrittskanals 4.1 angeordnet und diesem zugeordnet. Diese erste Luftleitvorrichtung 3.1 dient insbesondere der Einstellung der durch die äußeren Kanale 2.a.1 und 2.b.1 ausströmenden Luft. Eine zweite Luftleitvorrichtungen 3.2 (auch inneres Luftleit- oder Stellelement genannt) ist vor dem Anströmbereich der inneren Kanäle 2.a.2 und 2.b.2 im Ausströmbereich des zweiten Lufteintrittskanals 4.2 angeordnet und diesem zugeordnet. Dabei dienen insbesondere die beiden inneren Kanäle 2.a.2, 2.b.2 (auch kurz Spots oder Spotkanäle genannt), die im Anströmbereich vom unteren zweiten Lufteintrittskanal 4.2 beströmt werden, dem Betriebsfall "Spotförmiger Luftaustritt" für eine schnelle Klimatisierung, z. B. eine schnelle Kühlung. Der erste, insbesondere obere Lufteintrittskanal 4.1 dient dem Beströmen der beiden äußeren Kanäle 2.a.1, 2.b.1, die aus dem oberen Lufteintrittskanal 4.1 hervorgehen und als Drallkanäle dem Betriebsfall "Diffuser Luftaustritt" für eine angenehme Klimatisierung ohne Luftzugerscheinungen dienen.

Die Luftleitvorrichtungen 3.1 und 3.2 werden im Folgenden näher beschrieben. Die erste Luftleitvorrichtung 3.1 ist im Ausführungsbeispiel nach den Figuren 1 bis 5 im Ausströmbereich des ersten Lufteintrittskanals 4.1 vor dem Anströmbereich der beiden äußeren Kanäle 2.a.1 und 2.b.1 angeordnet. Wie in den Figuren 1 und 2 gezeigt, besteht die erste Luftleitvorrichtung 3.1 aus einem flügelförmigen Luftleitelement, dessen Flügel gewölbt und/oder gewunden sind und insbesondere zwei Helices bilden, die eine Verdrallung der aus dem Lufteintrittskanal 4.1 ausströmenden Luft bewirken, so dass die in den äußeren Kanälen 2.a.1 und 2.b.1 einströmende Luft an der zugehörigen Austrittsöffnung 5 des Luftausströmers 1 aufplatzt und diffus ausstrahlt. Die erste Luftleitvorrichtung 3.1 ist dabei achsensymmetrisch bezüglich dessen Symmetrieachse 6, die im Ausführungsbeispiel auch die Bewegungsachse 7 bildet, ausgeführt.

Zur Einstellung der diffusen, aus den äußeren Kanälen 2.a.1 und 2.b.1 austretenden Strömung ist die erste Luftleitvorrichtung 3.1 entlang der Bewegungsachse 7 auf zwei Führungsschienen 8.1 und 8.2 zwischen den Endstellungen I und II in eine beliebige Zwischenstellung bewegbar und stellbar. Je nach Art und Ausführung der ersten Luftleitvorrichtung 3.1 kann nur eine Führungsschiene vorgesehen sein. Zum Verstellen der ersten Luftleitvorrichtung 3.1 entlang der Führungsschienen 8.1 und 8.2 sind diese beispielsweise als eine Gewindestange oder Spindel ausgeführt. Dabei sind die Führungsschienen 8.1 und 8.2 in eine zugehörige Ausnehmung 10.1 bzw. 10.2 der ersten Luftleitvorrichtung 3.1 geführt. Die Ausnehmungen 10.1 und 10.2 sind jeweils mit einem zu dem Außengewinde der Gewindestange oder der Spindel korrespondierenden Innengewinde versehen. Zur Einstellung der Position der ersten Luftleitvorrichtung 3.1 werden die Führungsschienen 8.1 und 8.2 über ein Zahnradgetriebe 11 angetrieben. Dabei ist jede Führungsschiene 8.1 und 8.2 endseitig mit einem Zahnrad 11.1 bzw. 11.2 versehen, in welche ein Betätigungselement 11.3 eingreift, das randseitig ebenfalls Zahnsegmente aufweist oder als ein Zahnrad oder Zahnsegment ausgebildet ist.

In den Figuren 1 und 2 ist die erste Luftleitvorrichtung 3.1 in eine Zwischenstellung gestellt, so dass die hierdurch eingestellte Luftmenge über den ersten Lufteintrittskanal 4.1 in den Luftausströmer 1 einströmt und über eine gemeinsame Austrittsöffnung 9 in die äußeren Kanäle 2.a.1 und 2.b.1 aufgeteilt wird und über diese und über die Austrittsöffnung 5 des Luftausströmers 1 ausströmt.

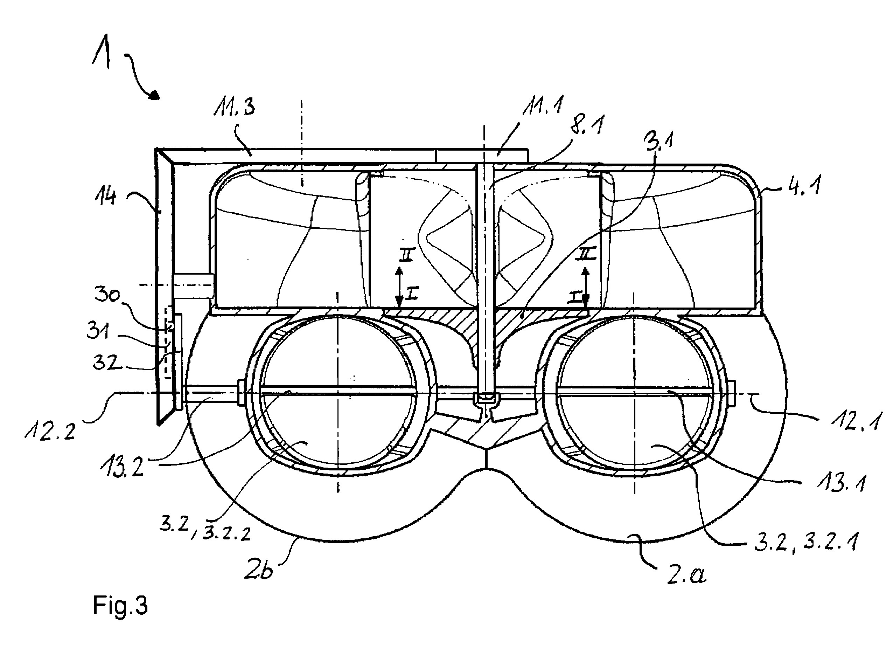

Figur 3 zeigt den Luftausströmer 1 gemäß den Figuren 1 und 2 im Querschnitt im Strömungseingangsbereich E. Dabei ist die erste Luftvorrichtung 3.1 in die Endstellung I gefahren, d.h. die Austrittsöffnung 9 und somit auch die äußeren Kanäle 2.a.1 und 2.b.1 sind strömungseingangsseitig geschlossen.

Die zweite Luftleitvorrichtung 3.2 ist, wie dargestellt, aus zwei inneren klappenförmigen Luftleitelementen 3.2.1 und 3.2.2 gebildet, wie im Detail in Figur 3 gezeigt. Die beiden klappenförmigen Luftleitelemente 3.2.1 und 3.2.2 sind jeweils auf einer quer zum zugehörigen inneren Kanal 2.a.2 und 2.b.2 verlaufenden Drehachse 12.1 bzw. 12.2, insbesondere der Mittelwaagerechten schwenkbar angeordnet und zwischen der vollständig schließenden Endstellung I und der vollständig öffnenden Endstellung II in eine beliebige Zwischenstellung stellbar. Die jeweilige Drehachse 12.1 und 12.2 sind im jeweiligen Ein- oder Anströmbereich der beiden inneren Kanäle 2.a.2 und 2.b.2 angeordnet. Alternativ kann die jeweilige Drehachse 12.1, 12.2 in nicht näher dargestellter Art und Weise die jeweilige Mittelsenkrechte der inneren Kanäle 2.a.2 und 2.b.2 im Anströmbereich bilden.

Die Luftleitelemente 3.2.1, 3.2.2 sind in Art von Klappen, beispielsweise Umlenkklappen oder Schmetterlingsklappen, ausgeführt und zum Beispiel synchron mit gleichem Drehsinn um die jeweils zugehörige Drehachse 12.1 und 12.2 schwenkbar. Alternativ können die Luftleitelemente 3.2.1 und 3.2.2 separat und gegebenenfalls auch asynchron verstellbar sein. Auch können die Luftleitelemente 3.2.1 und 3.2.2 mit gegenläufigem Drehsinn um die jeweilige Drehachse 12.1 bzw. 12.2 geschwenkt werden. Hierzu sind entsprechend nicht näher dargestellte separate Antriebe erforderlich.

Zur schwenkbaren Bewegung der inneren klappenförmigen Luftleitelemente 3.2.1 und 3.2.2 um die Drehachsen 12.1 und 12.2 sind diese auf jeweils einer zugehörigen Drehwelle 13.1 bzw. 13.2 gelagert. Die Drehwellen 13.1 und 13.2 können ineinander verschiebbar angeordnet sein. Sie können alternativ Verzahnungen aufweisen, die ineinander greifen, so dass durch Drehen einer der Drehwellen 13.1 oder 13.2 die andere zwangsweise mitläuft. Die Drehwellen 13.1 und 13.2 durchlaufen die beiden inneren Kanäle 2.a.2 und 2.b.2 über die gesamte Breite und sind durch Öffnungen in den Wänden endseitig gelagert. Zum synchronen Bewegen ist beispielsweise auf einem Ende der beiden Drehwellen 13.1 und 13.2 als weiteres Betätigungselement ein Stellelement 14 vorgesehen, dass außen an der betreffenden Drehwelle 13.1 bzw. 13.2 eingreift. An der Achse 12.2 ist hierzu ein Hebel 32, beispielsweise angespritzt, vorgesehen, welcher über einen Zapfen 30, der in eine im Stellelement 14 ausgebildete Kurvenbahn 31 eingreift. Eine Bewegung des Stellelements 14 wird so über den Eingriff des Zapfens 30 in die Kurvenbahn 31 des Stellelements 14 auf die Drehwellen 13.1 und/oder 13.2 übertragen.

Für eine einfache und insbesondere Raum sparende Verstellung sind das Stellelement 14 für die inneren klappenförmigen Luftleitelemente 3.2.1 und 3.2.2 und das Betätigungselement 11.3 für die äußere Luftleitvorrichtung 3.1 miteinander koppelbar, indem das Stellelement 14 und das Betätigungselement 11.3 beispielsweise als Zahnräder ausgeführt sind, deren Zahnsegmente ineinander greifen. Auch kann eine andere geeignete Kopplungsart, z. B. ein Stangengetriebe oder ein Scheibengetriebe, gewählt und verwendet werden. Durch diese Kopplung von Stellelement 14 und Betätigungselement 11.3 ist lediglich ein Antrieb zum Verstellen aller Luftleitvorrichtungen 3.1 und 3.2 erforderlich. Zur Einstellung der Luftströmung nur in den jeweils als Spotkanal ausgebildeten inneren Kanäle 2.a.2 und 2.b.2 oder nur in den jeweils als Diffuskanal ausgebildeten äußeren Kanälen 2.a.1 und 2.b.1 sind das Stellelement 14 und das Betätigungselement 11.3 voneinander entkoppelt und separat angetrieben.

In der dargestellten Ausführungsform umfasst der Luftausströmer 1 zur Beeinflussung der Luftströmung die eine diffuse Strömung bewirkende Luftleitvorrichtung 3.1 und die eine Spotströmung bewirkende Luftleitvorrichtung 3.2. Je nach Art und Größe sowie Anzahl der Lufteintrittskanäle 4.1 und 4.2 und der Luftaustrittskanäle 2.a und 2.b mit den Teilkanälen 2.a.1, 2.a.2, 2.b.1 und 2.b.2 kann eine entsprechende Anzahl von weiteren Luftleitvorrichtungen 3.1 und 3.2 je Luftausströmer 1 vorgesehen sein. Auch können in Strömungsrichtung gesehen mehrere Luftleitvorrichtungen 3.1 und 3.2 hintereinander angeordnet sein.

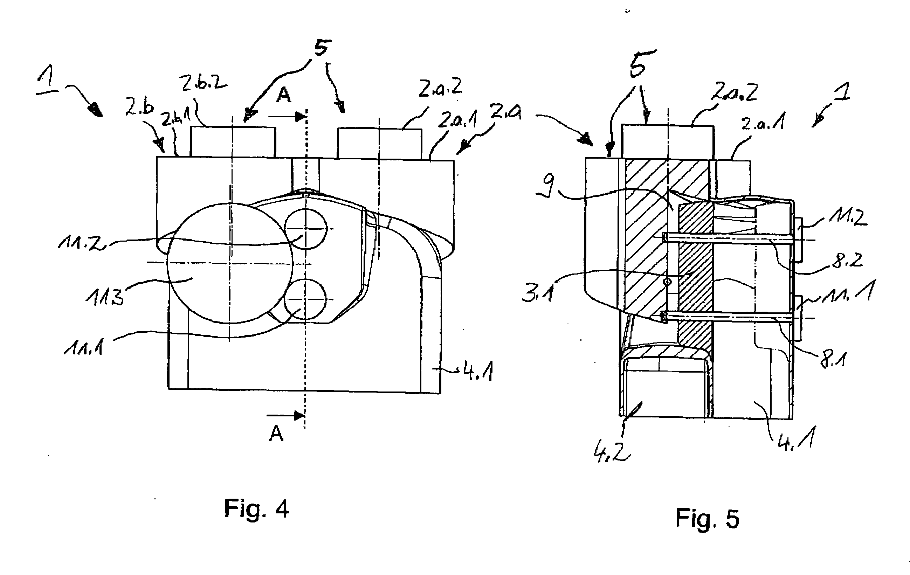

In der Figur 4 ist das Ausführungsbeispiel nach den Figuren 1 bis 3 in Draufsicht von oben dargestellt. In dieser Darstellung ist das Zahnradgetriebe 11 mit dem Betätigungsrad 11.3, das in die endseitig an den Führungsschienen 8.1 und 8.2 angeordneten Zahnräder 11.1 bzw. 11.2 zur Verstellung der ersten Luftleitvorrichtung 3.1 eingreift, näher dargestellt. Das Zahnradgetriebe 11 sowie die darunter nicht sichtbar angeordnete erste Luftleitvorrichtung 3.1 sind im Ausströmbereich des ersten Lufteintrittskanal 4.1 und innerhalb von diesem (siehe Figur 5) und somit zumindest unmittelbar vor dem oder teilweise im Anströmbereich der äußeren Kanäle 2.a.1 und 2.b.1 angeordnet.

Figur 5 zeigt einen Längsschnitt A-A des Luftausströmers 1 gemäß Figur 4 im Detail. Die erste Luftleitvorrichtung 3.1 ist in der geschlossenen Endstellung I gezeigt, d.h. die Austrittsöffnung 9 ist geschlossen und es strömt keine Luft aus dem ersten Lufteintrittskanal 4.1 in die äußeren Kanäle 2.a.1 und 2.a.2. Wie deutlich zu sehen ist, ist die erste Luftleitvorrichtung 3.1 innerhalb des ersten Lufteintrittskanals 4.1 angeordnet. Der erste Lufteintrittskanal 4.1 ist über dem zweiten Lufteintrittskanal 4.2 angeordnet.

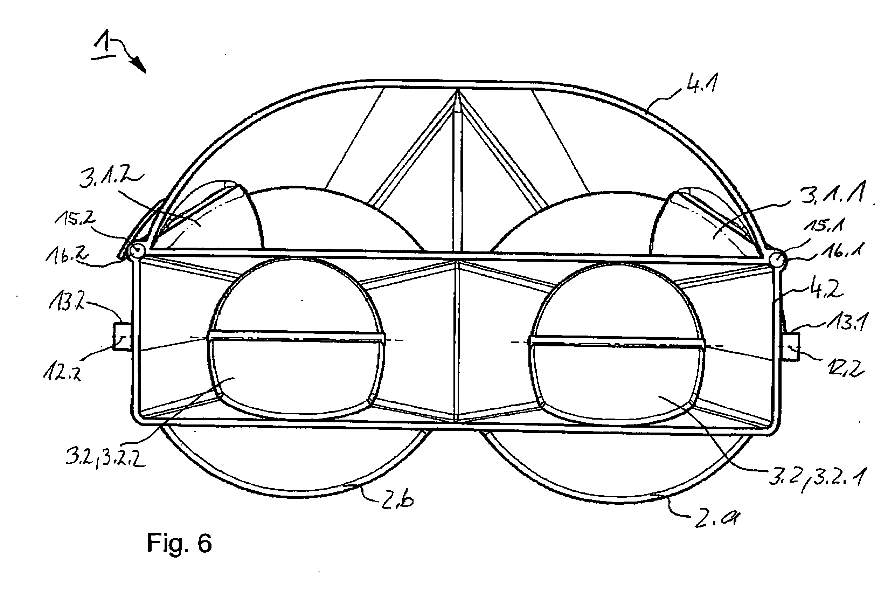

Figuren 6 bis 12 zeigen alternative Ausführungsformen für eine einen diffusen Luftaustritt bewirkende erste Luftleitvorrichtung 3.1.

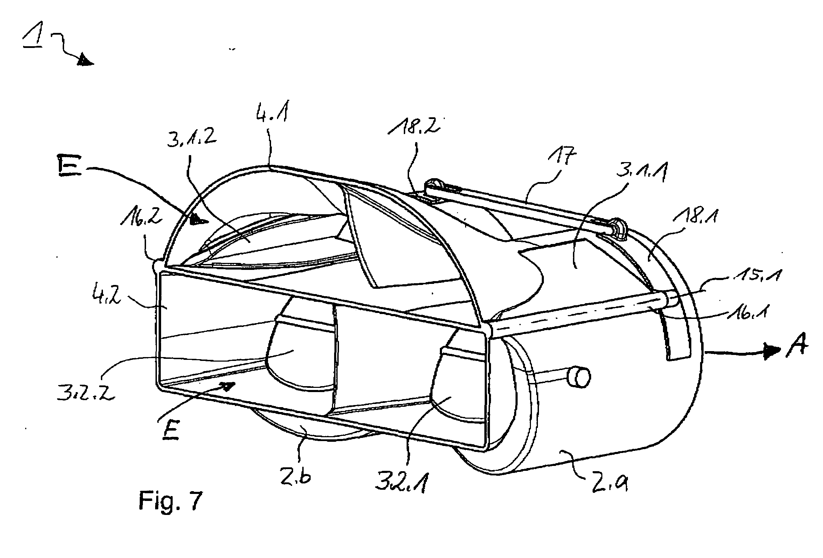

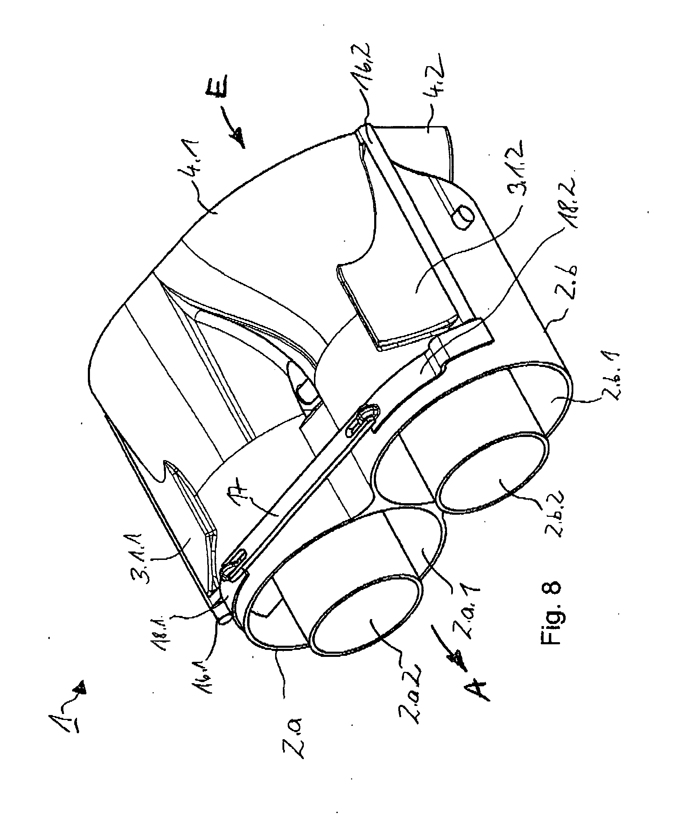

In Figur 6 ist die erste Luftleitvorrichtung 3.1 außerhalb des ersten Lufteintrittskanals 4.1 und im Anströmbereich der beiden äußeren Kanäle 2.a.1 und 2.b.1, wie dies in Figur 7 in der perspektivischen Ansicht von hinten und in der Figur 8 in der perspektivischen Ansicht von vorne näher gezeigt ist. Daraus resultierend ist die erste Luftleitvorrichtung 3.1 zumindest am Ende des Ausströmbereichs des ersten Lufteintrittskanals 4 angeordnet und aus zwei klappenförmigen Luftleitelementen 3.1.1 und 3.1.2 gebildet, die jeweils einem der beiden äußeren Kanäle 2.a.1 und 2.b.1 in deren Anströmbereich zugeordnet sind. Die beiden äußeren klappenförmigen Luftleitelemente 3.1.1 und 3.1.2 sind zur Einstellung eines diffusen Luftaustritt entlang ihrer Längsausdehnung entsprechend gewölbt und/oder gewunden ausgeführt und bilden bevorzugt jeweils eine Helix, so dass die am Ausgang des ersten Lufteintrittskanals 4.1 austretende Luft mit einem Drall beaufschlagt wird und strömungsausgangsseitig aus den äußeren Kanälen 2.a.1 und 2.b.1 an der jeweiligen Austrittsöffnung 5 des Luftausströmers 1 aufspreizt und diffus ausströmt.

Zur Einstellung des diffusen Luftaustritts aus den äußeren Kanälen 2.a.1 und 2.b.1 sind die beiden äußeren klappenförmigen Luftleitelemente 3.1.1 und 3.1.2 entlang einer zugehörigen Drehachse 15.1 bzw. 15.2 schwenkbar angeordnet. Dabei sind die äußeren klappenförmigen Luftleitelemente 3.1.1 und 3.1.2 um die Drehachsen 15.1 bzw. 15.2 auf einer zugeordneten Drehwelle 16.1 bzw. 16.2 zwischen einer den zugehörigen äußeren Kanal 2.a.1 bzw. 2.b.1 verschließenden Endstellung I und einer diesen Kanal 2.a.1 bzw. 2.b.1 öffnenden Endstellung II in eine beliebige Zwischenstellung stellbar. Des Weiteren sind die äußeren klappenförmigen Luftleitelemente 3.1.1 und 3.1.2 auf der Drehwelle 16.1 bzw. 16.2 synchron verstellbar und zueinander schwenkbar angeordnet. Hierzu sind die beiden klappenförmigen Luftleitelemente 3.1.1 und 3.1.2 beispielsweise über ein Koppelgestänge 17 oder ein einfaches Verbindungselement miteinander gekoppelt. Darüber hinaus greift die jeweilige Drehwelle 16.1 oder 16.2 in insbesondere gebogene Führungselemente 18.1 und 18.2 der Luftleitelemente 3.1.1 und 3.1.2 in nicht näher dargestellter Art und Weise beispielsweise über ein Zahnrad oder ein Ritzel ein. Eine der Drehwellen 16.1 oder 16.2 ist endseitig in nicht näher dargestellter Art und Weise mit einem Antrieb, z. B. einem zugehörigen Betätigungselement in Form eines Zahnrads oder Zahnsegments, versehen, der in die betreffende Drehwelle 16.1 oder 16.2 eingreift, so dass diese beim Drehen ein Schwenken des betreffenden Luftleitelements 3.1.1 bzw. 3.2.1 und über die Führungselemente 18.1 und 18.2 sowie das Koppelgestänge 17 gleichzeitig ein Schwenken des anderen Luftleitelements 3.1.1 bzw. 3.1.2 bewirkt. Je nach Ausführung des Koppelgestänges 17 und der Führungselemente 18.1 und 18.2 können die beiden äußeren klappenförmigen Luftleitelemente 3.1.1 und 3.1.2 für ein asynchrones Verstellen auch voneinander entkoppelt werden.

Darüber hinaus können die beiden äußeren klappenförmigen Luftleitelemente 3.1.1 und 3.1.2 in Analogie zu den Ausführungsbeispielen nach den Figuren 1 und 2 über eine entsprechende Kopplungseinrichtung mit einem Antrieb für die zweite Luftleitvorrichtung 3.2 für ein synchrones Verstellen koppelbar und für ein asynchrones Verstellen entkoppelbar sein. Die zweite Luftleitvorrichtung 3.2 für einen spotförmigen Luftaustritt ist analog zu den Ausführungsbeispielen der Figuren 1 bis 5 aus zwei inneren klappenförmigen Luftleitelementen 3.2.1 und 3.2.2 gebildet.

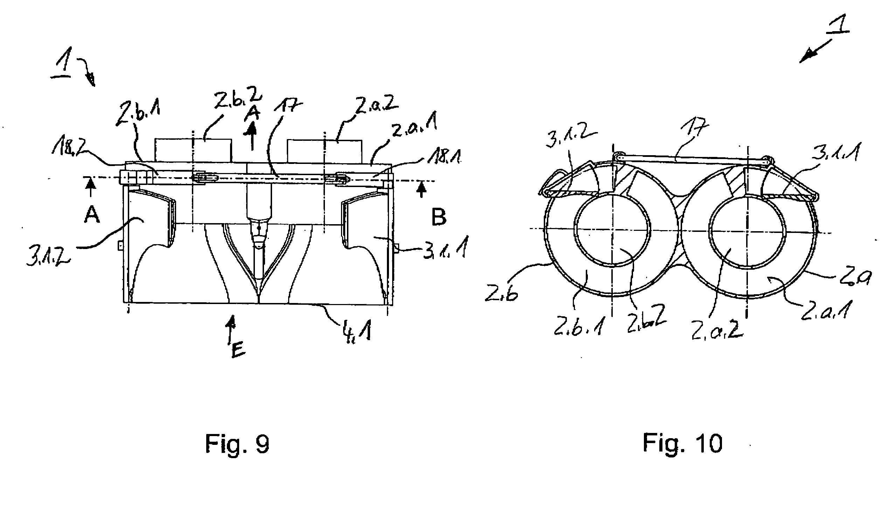

Figur 9 zeigt den Luftausströmer 1 gemäß den Figuren 6 bis 8 in Ansicht von oben. Figur 10 zeigt einen Querschnitt A-B durch den Luftausströmer 1 gemäß Figur 9.

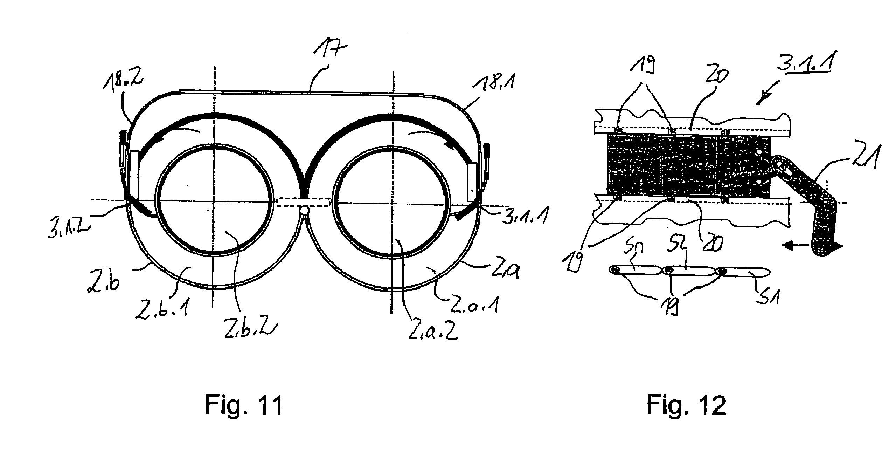

In den Figuren 11 und 12 ist eine weitere alternative Ausführungsform für die äußeren Luftleitelemente 3.1.1 und 3.1.2 gezeigt, die am Ende des Ausströmbereichs des Lufteintrittskanals 4.1 im Anströmbereich der äußeren Kanäle 2.a.1 und 2.a.2 angeordnet sind. Dabei sind die äußeren Luftleitelemente 3.1.1 und 3.1.2 in diesem Ausführungsbeispiel.aus mehreren einzelnen Segmenten S1 bis Sn gebildet, die beispielsweise beweglich miteinander verbunden sind. Beispielsweise kann es sich um eine aus beispielsweise Kunststoff gespritzte und bewegliche Segmentkette handeln. Die Luftleitelemente 3.1.1 und 3.1.2, insbesondere deren Segmente S1 bis Sn weisen Stifte 19 auf, die, wie in Figur 12 näher dargestellt, in einer Führungsnut 20 geführt sind. Über ein Gestänge 21 werden die Luftleitelemente 3.1.1 und 3.1.2 entsprechend angetrieben und entlang der Führungsnut 20 geführt und in eine den jeweiligen äußeren Kanal 2.a.1 bzw. 2.a.2 verschließenden Endstellung I oder öffnenden Endstellung II oder in eine beliebige Zwischenstellung gestellt. Die Luftleitelemente 3.1.1 und 3.1.2 können, analog wie oben zu den anderen Ausführungsbeispielen beschrieben, separat oder gemeinsam über mehrere oder einen Antrieb oder mechanisch über einen Handantrieb oder manuell verstellt werden. Auch können diese zur synchronen Verstellung mit der inneren Luftleitvorrichtung 3.2 gekoppelt sein.

Die Erfindung ist auf die gezeigten Ausführungsbeispiele nicht begrenzt. Insbesondere können bei einer anderen Querschnittsform der Lufteintrittskanäle 4.1 und 4.2 und/oder der Luftaustrittskanäle 2.a und 2.b entsprechend geeignet ausgebildete Luftleitvorrichtungen 3.1 bis 3.2 vorgesehen sein.

## Patentansprüche

1. Luftausströmer (1), insbesondere für ein Kraftfahrzeug, umfassend im Strömungsausgangsbereich (A) mindestens zwei parallel nebeneinander angeordnete Luftaustrittskanäle (2.a, 2.b), die jeweils in einen äußeren, insbesondere ringförmigen Kanal (2.a.1, 2.b.1) und einen inneren Kanal (2.a.2, 2.b.2) unterteilt sind, wobei der jeweilige äußere Kanal (2.a.1, 2.b.1) den zugehörigen inneren Kanal (2.a.2, 2.b.2) umgibt und parallel zu diesem verläuft, und wobei im Strömungseingangsbereich (E) jeweils die äußeren Kanälen (2.a.1, 2.b.1) von einem ersten Lufteintrittskanal (4.1) und die inneren Kanäle (2.a.2, 2.b.2) von einem zweiten Lufteintrittskanal (4.2) beströmbar sind und in einem Übergangsbereich zwischen Ausströmbereiche der Lufteintrittskanäle (4.1, 4.2) und Anströmbereiche der äußeren Kanäle (2.a.1, 2.b.1) und der inneren Kanäle (2.a.2, 2.b.2) mindestens eine erste Luftleitvorrichtung (3.1) dem ersten Lufteintrittskanal (4.1) und mindestens eine zweite Luftleitvorrichtung (3.2) dem zweiten Lufteintrittskanal (4.2) zugeordnet sind.

2. Luftausströmer nach Anspruch 1, wobei die erste Luftleitvorrichtung (3.1) in Strömungsrichtung gesehen im Ausströmbereich des ersten Lufteintrittskanals (4.1) angeordnet ist.

3. Luftausströmer nach Anspruch 2, wobei die erste Luftleitvorrichtung (3.1) bei einer Anordnung im ersten Lufteintrittskanal (4.1) aus einem flügelförmigen Luftleitelement gebildet ist, das insbesondere zwei Helices bildet, die einen Drall der ausströmenden Luft bewirken.

4. Luftausströmer nach Anspruch 3, wobei das flügelförmige Luftleitelement achsensymmetrisch bezüglich dessen Symmetrieachse (6) und/oder dessen Bewegungsachse (7) ausgebildet ist.

5. Luftausströmer nach Anspruch 3 oder 4, wobei das flügelförmige Luftleitelement zwischen einer den ersten Lufteintrittskanal (4.1) und/oder den Anströmbereich der äußeren Kanäle (2.a.1, 2.b.1) vollständig schließenden Endstellung (I) und vollständig öffnenden Endstellung (II) in eine beliebige Zwischenstellung stellbar ist.

6. Luftausströmer nach einem der Ansprüche 2 bis 5, wobei das flügelförmigen Luftleitelement entlang mindestens einer oder mehrerer Führungsschienen (8.1, 8.2) senkrecht in den ersten Lufteintrittskanal (4.1) ein- oder ausfahrbar ist.

7. Luftausströmer nach Anspruch 6, wobei die Führungsschiene (8.1, 8.2) als eine Gewindestange oder eine Spindel ausgeführt ist, an der das flügelförmige Luftleitelement bewegbar angeordnet ist.

8. Luftausströmer nach Anspruch 6 oder 7, wobei die Führungsschiene (8.1, 8.2) endseitig über ein Zahnradgetriebe (11), insbesondere über ein an der jeweiligen Führungsschiene (8.1, 8.2) angeordnetes Zahnrad (11.1, 11.2) und/oder Zahnsegment angetrieben ist.

9. Luftausströmer nach Anspruch 2, wobei die erste Luftleitvorrichtung (3.1) bei einer Anordnung im Ausströmbereich des ersten Lufteintrittskanals (4.1) außerhalb von diesem aus mindestens zwei, insbesondere miteinander koppelbaren klappenförmigen Luftleitelementen (3.1.1, 3.1.2) gebildet ist, die insbesondere jeweils eine Helix bilden und einen Drall der ausströmenden Luft bewirken.

10. Luftausströmer nach Anspruch 9, wobei die beiden klappenförmigen Luftleitelemente (3.1.1, 3.1.2) jeweils über eine zugehörige, insbesondere in Längsausrichtung parallel zum ersten Lufteintrittskanal (4.1) und zum jeweiligen äußeren Kanal (2.a.1, 2.b.1) verlaufende Drehachse (15.1, 15.2) zwischen einer den jeweils zugehörigen äußeren Kanal (2.a.1, 2.b.1) vollständig schließenden Endstellung (I) und vollständig öffnenden Endstellung (II) in eine beliebige Zwischenstellung stellbar sind.

11. Luftausströmer nach Anspruch 9 oder 10, wobei die beiden klappenförmigen Luftleitelemente (3.1.1, 3.1.2) über ein Koppelgestänge (17) synchron schwenkbar, insbesondere zueinander schwenkbar sind.

12. Luftausströmer nach einem der Ansprüche 9 bis 11, wobei den jeweiligen klappenförmigen Luftleitelementen (3.1.1, 3.1.2) zugehörige Drehwellen (16.1, 16.2) über ein Ritzel oder ein Zahnrad angetrieben sind.

13. Luftausströmer nach einem der Ansprüche 9 bis 12, wobei die klappenförmigen Luftleitelemente (3.1.1, 3.1.2) jeweils aus mindestens zwei Teilsegmenten (S1 bis Sn) gebildet sind, die mindestens eine verstellbare Helix bilden.

14. Luftausströmer nach einem der Ansprüche 1 bis 13, wobei die zweite Luftleitvorrichtung (3.2) aus mindestens zwei inneren klappenförmigen Luftleitelementen (3.2.1, 3.2.2) gebildet ist, die jeweils in den Anströmbereichen der inneren Kanälen (2.a.2, 2.b.2) angeordnet sind.

15. Luftausströmer nach Anspruch 14, wobei das jeweilige innere klappenförmige Luftleitelement (3.2.1, 3.2.2) auf einer quer zum zugehörigen inneren Kanal (2.a.2, 2.b.2) verlaufenden Drehachse (12.1, 12.2), insbesondere Mittelsenkrechte oder Mittelwaagerechte zwischen einer den jeweiligen inneren Kanal (2.a.2, 2.b.2) vollständig schließenden Endstellung (I) und einer vollständig öffnenden Endstellung (II) in eine beliebige Zwischenstellung stellbar, insbesondere schwenkbar ist.

16. Luftausströmer nach Anspruch 14 oder 15, wobei die den inneren klappenförmigen Luftleitelementen (3.2.1, 3.2.2) zugehörigen Drehwellen (13.1, 13.2) miteinander entlang einer Symmetrieachse gemeinsam angeordnet und koppelbar sind.

17. Luftausströmer nach einem der Ansprüche 14 bis 16, wobei die inneren klappenförmigen Luftleitelemente (3.2.1, 3.2.2) synchron oder asynchron verstellbar angeordnet sind.

18. Luftausströmer nach einem der Ansprüche 14 bis 17, wobei die inneren klappenförmigen Luftleitelemente (3.2.1, 3.2.2) jeweils als Umlenk- oder Schmetterlingsklappe ausgebildet sind.

19. Luftausströmer nach einem der vorhergehenden Ansprüche, wobei die erste Luftleitvorrichtung (3.1) und die zweite Luftleitvorrichtung (3.2) in Strömungsrichtung gesehen in einer Ebene übereinander und/oder versetzt hintereinander angeordnet sind.

20. Luftausströmer nach einem der vorhergehenden Ansprüche, wobei die erste Luftleitvorrichtung (3.1) und die zweite Luftleitvorrichtung (3.2) asynchron oder synchron verstellbar sind.

21. Luftausströmer nach einem der vorhergehenden Ansprüche, wobei die erste Luftleitvorrichtung (3.1) und die zweite Luftleitvorrichtung (3.2) über eine Getriebeanordnung miteinander koppelbar sind.

22. Luftausströmer nach Anspruch 20, wobei die Getriebeanordnung als ein Zahnradgetriebe oder ein Stangengetriebe ausgebildet ist.
